# EUROPÄISCHE PATENTSCHRIFT

(11) **EP 0 638 520 B1**
(45) Veröffentlichungstag und Bekanntmachung des Hinweises auf die Patenterteilung: **09.10.1996**
(21) Anmeldenummer: 94111967.9
(22) Anmeldetag: 01.08.1994
(51) Int. Cl.: C01G 51/04, H01M 4/52, C22C 1/05

(54) **Cobalt-Cobaltoxidpulver, Verfahren zu seiner Herstellung sowie dessen Verwendung**
Cobalt-cobalt oxide powder, process for its preparation and use thereof
Poudre de cobalt et d'oxyde de cobalt, procédé de sa préparation et son utilisation

(30) Priorität: 12.08.1993 DE 4327023
(43) Veröffentlichungstag der Anmeldung: 15.02.1995
(73) Patentinhaber: H.C. Starck GmbH & Co. KG, D-38642 Goslar (DE)
(72) Erfinder: Krynitz, Ulrich, Dr., D-38640 Goslar (DE); Naumann, Dirk Dr., D-38667 Bad Harzburg (DE); Mende, Bernd Dipl.-Chemiker, D-38667 Bad Harzburg (DE); Olbrich, Armin Dr., D-38723 Seesen (DE); Gille, Gerhard Dr., D-38640 Goslar (DE)
(74) Vertreter: Steiling, Lothar, Dr.

(56) Entgegenhaltungen:
- EP-A- 0 419 220
- EP-A- 0 523 284
- PATENT ABSTRACTS OF JAPAN vol. 14, no. 55 (E-882) (3998) 31. Januar 1990 & JP-A-01 279 563 (TOSHIBA BATTERY CO LTD) 9. November 1989
- CHEMICAL ABSTRACTS, vol. 114, no. 6, 11. Februar 1991, Columbus, Ohio, US; abstract no. 46598b, Seite 218

## Beschreibung

Die vorliegende Erfindung betrifft ein neues Cobalt-Cobaltoxidpulver der Zusammensetzung Coₓ(CoO)₁₋ₓ, Verfahren zu seiner Herstellung sowie dessen Verwendung.

Als wesentliche elektrochemisch aktive Bestandteile von Nickel-Elektroden für Nickel-Cadmium oder Nickel-Metallhydrid-Sekundärbatterien werden Nickelhydroxid und als Additive Cobaltverbindungen wie z.B. Cobaltmetallpulver, Cobalt(II)oxid und/oder Cobalt(II)-hydroxid eingesetzt. Diese Bestandteile werden zusammen mit weiteren Hilfsstoffen zu Pasten verarbeitet, die dann in einen elektrischen leitfähigen Elektrodenträger eingearbeitet werden. Die so erhaltenen Elektroden werden weiteren Verarbeitungsschritten wie Trocknen und/oder Sintern unterworfen, um zu den gewünschten Batterien unterschiedlicher Bauform zu gelangen.

Insbesondere für die Herstellung von Knopfzellen werden die elektrochemisch aktiven Elektrodenbestandteile gemeinsam mit Hilfsstoffen wie z.B. Graphit oder Nickelpulver zu Tabletten unterschiedlicher Größe verpreßt. Die Cobaltkomponente wird dabei üblicherweise in Form einer Mischung aus Cobaltmetallpulver und Cobalt(II)oxid oder Cobalt(II)hydroxid eingesetzt. Aus dem Dokument JP-A-2-216 763 ist eine Mischung von 50 Gew.% CoO und 50 Gew% Co bekannt.

Den Cobaltverbindungen, die meist in einer Konzentration von 2-10 % in der Elektrodenmasse vorliegen, werden verschiedene Aufgaben zugeordnet.

So wird in der EP-A 353 837 postuliert, daß bei der Formulierung der Elektrode, also der ersten Ladung der Batterie, das Cobaltmetall entsprechend seinem Potential zuerst zu zweiwertigem Cobalt oxidiert wird, welches im alkalischen Elektrolyten löslich ist. Co²⁺-Ionen aus dem Cobaltmetall und gegebenenfalls schon vorliegende Co²⁺-Ionen aus dem Monooxid oder Hydroxid diffundieren in Richtung der Oberfläche des Nickelhydroxids. Sie werden bei weiterer Ladung der Batterie zu Co⁺³-Ionen in Form von CoO(OH) oxidiert. Letzteres scheidet sich als Schicht auf der Oberfläche der Nickelhydroxid-Partikel ab. Diese Schicht bewirkt in den folgenden Lade- und Entladezyklen der Batterie die erforderliche elektrische Leitfähigkeit des Elektrodenmaterials. Das Co²⁺-Ion kann außerdem in das Schichtengitter des Nickelhydroxids hineinwandern und dort die elektrochemischen Eigenschaften des Nickelhydroxid so verändern, daß eine höhere Ladeeffezienz des Elektrodenmaterials erreicht wird. Des weiteren dient die Cobaltkomponente als Sicherheitsreserve bei zu starker Entladung, indem das Co²⁺-Ion elektrochemisch reduziert und eine Wasserstoffentwicklung verhindert wird.

Infrage kommende Cobaltverbindungen werden offenbart in der US-Patenten US-A 5 032 475 und US-A 5 053 292 sowie der europäischen Patentanmeldung EP-A 523 284.

Das Cobaltmetallpulver wird bei der elektrochemischen Oxidation in einer Größenordnung von nur 50 % in der Elektrode für die Lade- und Entladeprozesse nutzbar gemacht, da ein wesentlicher Anteil des Metalls sich mit einer fest haftenden Oxidschicht überzieht und weiteres Cobalt als Co²⁺-Ion in seiner Diffusion im Elektrolyten behindert wird. Letztlich wandelt sich annähernd 50 % des Cobaltmetalls in unlösliche, kompakte Cobaltoxide um. Dieses Problem wurde bisher dadurch umgangen, daß teilweise lösliche Cobaltverbindungen wie Cobalthydroxid oder Cobaltmonoxid der Elektrodenmasse zugegeben wurden. Schon vor der elektrochemischen Formierung verteilt sich das teilweise gelöste Co²⁺-Ion im Elektrolyten und scheidet sich in der gewünschten Form auf der Oberfläche des Nickelhydroxids ab. (Matsumo et al.: The 162nd ECS Fall Meeting Detroit, 18 (1982).

Das bisher für die beschriebenen Einsatzzwecke verwendete Cobalt(II)oxid wird technisch durch thermische Zersetzung von Cobaltcarbonat, Cobalthydroxid oder höheren Cobaltoxiden hergestellt. Dabei entstehen jedoch Cobaltoxide, die - dem thermodynamischen Gleichgewicht entsprechend - einen Überschuß von Sauerstoff enthalten (siehe Gmelin, Co, Ergänzungsband 58, Seiten 470-479). Der Sauerstoffüberschuß verringert sich mit der Erhöhung der Kalzinierungstemperatur.

Spuren von Co³⁺ im Cobalt(II)oxid beschleunigen die weitere Oxidation des zweiwertigen Cobalts unter Einfluß von Luftsauerstoff und Luftfeuchtigkeit. Das dabei entstehende dreiwertige Cobalt steht in der Batterie wegen seiner Unlöslichkeit im Elektrolyten nicht als wirksame Komponente des Elektrodenmaterials zur Verfügung und unterbindet somit die Nutzbarkeit der eingesetzten Cobaltverbindungen für den elektrochemischen Prozeß.

Das oft verwendete Cobalthydroxid zeigt eine geringere Löslichkeit im Elektrolyten als das Cobalt(II)oxid und weist ebenfalls eine hohe Empfindlichkeit gegenüber weiterer Oxidation durch Luftsauerstoff auf, besonders unter dem Einfluß von Luftfeuchtigkeit. Die Nutzbarkeit des Cobalts aus Cobalt(II)hydroxid in der Elektrode ist geringer als die des Cobalts aus Cobalt(II)oxid.

Es war daher die Aufgabe der vorliegenden Erfindung, ein Cobalt-Material als wirksame Komponente im Elektrodenmaterial für Sekundärzellen aus Nickelhydroxid zur Verfügung zu stellen, welches die Nachteile des Standes der Technik nicht aufweist und eine bessere Nutzbarkeit als die bisher bekannten Mischungen aus Cobaltmetallpulver und Cobalt(II)oxid zeigt.

Es wurde nun gefunden, daß diese Anforderungen erfüllt werden durch Cobalt-Cobaltoxidpulver der Zusammensetzung Coₓ(CoO)₁₋ₓ, wobei x = 0,02 bis 0,3 beträgt und die mittlere Parikelgröße Kleiner als 20 µm beträgt. Es handelt sich beim erfindungsgemäßen Cobalt-Cobaltoxidpulver um ein festes dunkelbraunes Pulver, in dem Cobalt(II)oxid und Cobaltmetall in feinsten Partikeln homogen verteilt sind. Das erfindungsgemäße Cobalt-Cobaltoxidpulver ist frei von Co³⁺-Anteilen. Durch die Gegenwart des Cobaltmetalls ist das erfindungsgemäße Cobalt-Cobaltoxidpulver gegen die nicht erwünschte Oxidation zu dreiwertigen Cobaltoxiden geschützt.

Die mittlere Partikelgröße der Primärteilchen des erfindungsgemäßen Cobalt-Cobaltoxidpulvers sollte in Abhängigkeit der Teilchengröße des Nickelhydroxides in der Batterie gewählt werden. In der Regel sollte sie kleiner als die des Nickelhydroxides sein, weil auf diese Weise sehr gleichmäßige Mischungen erhalten werden können. Außerdem ergibt sich gleichzeitig bei geringer Partikelgröße und großer BET-Oberfläche eine leichtere und schnellere Löslichkeit im Elektrolyten der Batterie. Bevorzugt beträgt die mittlere Partikelgröße der Primärteilchen 0,5 bis 10 µm.

Wie eingangs ausgeführt wurde, weisen herkömmliche Elektrodenmischungen neben Nickelhydroxid Mischungen aus Cobaltmetallpulver und Cobalt(II)oxid auf. Wird das Cobalt(II)oxid durch gleiche Anteile des erfindungsgemäßen Cobalt-Cobaltoxidpulvers ersetzt, kann eine um mindestens 10 % höhere Nutzbarkeit des eingesetzten Cobalts für die elektrochemischen Lade- und Entladevorgänge in der Batterie erzielt werden.

Durch eine Erhöhung des Anteils von Cobaltmetall im Cobalt-Cobaltoxidpulver läßt sich der Anteil des Cobaltmetallpulvers in der Elektrode weiter verringen, wodurch eine Ersparnis des eingesetzten Cobalts in der Elektrodenmasse erzielt werden kann. Die Wahl des Cobaltmetallgehaltes hängt wesentlich vom Typ der Batterie und den vorgesehenen Anwendungen ab.

Besonders geeignet sind Cobalt-Cobaltoxidpulver der Zusammensetzung Coₓ(CoO)₁₋ₓ, in denen x Werte zwischen 0,02 und 0,2 annimmt.

Gegenstand dieser Erfindung ist auch ein Verfahren zur Herstellung der erfindungsgemäßen Cobalt-Cobaltoxidpulver, wobei Cobaltoxid und/oder bei thermischer Zersetzung Cobaltoxide bildende Cobaltverbindungen bei Temperaturen von 500 bis 850°C unter zur Bildung der Cobalt-Cobaltoxidpulver führenden Bedingungen reduziert werden. Dabei können als Cobaltoxide vorteilhaft CoO, Co₂O₃ und/oder Co₃O₄, als Cobaltoxide bildende Cobaltverbindungen Hydroxide, Oxalate und/oder Carbonate eingesetzt werden. Als Reduktionsmittel eignen sich insbesondere Kohlenmonooxid, Wasserstoff, Kohlenstoff, Erdgas, Kohlenwassserstoffe und/oder Ammoniumformiat.

Die Reduktion findet unter den erfindungsgemäßen Bedingungen mit den genannten Reduktionsmitteln ohne Schwierigkeiten statt. Die Einstellung eines bestimmten Oxidationsgrades bei den erfindungsgemäßen Cobald-Cobaltoxidpulvern kann durch die Zudosierung der entsprechenden Menge an Reduktionsmitteln erfolgen. Vorteilhaft kann die Reduktion in Gegenwart von Inertgas durchgeführt werden.

Die Umsetzung erfolgte vorteilhaft kontinuierlich in Drehrohröfen oder Wirbelbetten im bevorzugten Temperaturbereich zwischen 580 und 650°C. Durch die Wahl der Calzinierbedingungen und Reaktionsparameter läßt sich die Partikelgrößenverteilung in einem weiten Bereich variieren. Besonders homogene Cobalt-Cobaltoxidpulver sind in einem Wendeldrehrohrofen erhältlich, wie er in der EP-B 135 078 offenbart ist.

Bei der Durchführung des erfindungsgemäßen Verfahrens im Drehrohr fließt der Cobaltvorstoff vorteilhaft mit einer bestimmten Menge pro Zeiteinheit in das Drehrohr ein. Die Verweilzeit läßt sich über den Neigungswinkel einstellen und ist daneben von der Beschaffenheit des Vorstoffes abhängig (Korngröße, Fließfähigkeit des unkalzinierten und kalzinierten Materials). Das Reduktionsmittel mit verdünntem Inertgas strömt im Gegenstrom in das Drehrohr ein. Die chemischen Reaktionen sind bei Eintritt des Cobaltvorstoffes die Kalzination zu CoO unter Abspaltung von CO₂, H₂O oder O₂ je nach Ausgangsstoff. Diese Reaktion wird bestimmt durch das thermodynamische Gleichgewicht, wobei CoO und Co₃O₄ zueinander in einem bestimmten Verhältnis stehen. Danach fließt das durch Kalzination gewonnene CoO in die Reduktionszone des Drehrohrs, wobei durch das Reduktionsmittel das restliche Co₃O₄ in das erfindungsgemäße Cobalt-Cobaltoxidpulver überführt wird.

Die Konzentration des Reduktionsgases nimmt von der Einströmstelle an exponentiell ab und sollte am Übergang in die Kalzinationszone zu mindestens 30 % abreagiert sein. Die Menge des Reduktionsgases bestimmt sich aus der Verweilzeit des zu reduzierenden Materials im Ofen und dem geforderten Anteil von Cobaltmetall im CoO. Die Konzentrationen der Gasmischungen an jeder beliebigen Stelle im Drehrohr können vorteilhaft durch massenspektrometrische Messungen bestimmt und die Gas-Strömungsgeschwindigkeit und die Gaszusammensetzung entsprechend der genannten Forderungen einreguliert werden.

Gegenstand dieser Erfindung ist auch die Verwendung der erfindungsgemäßen Cobalt-Cobaltoxidpulver als Bestandteil von Elektrodenmassen von sekundären Batterien.

Im folgenden wird die Erfindung beispielhaft erläutert, ohne daß hierin eine Einschränkung zu sehen ist.

### Beispiele 1-13

### Herstellung von Cobalt-Cobaltoxid in einem Drehrohrofen

In der Tabelle 1 sind verschiedene Cobalt-Cobaltoxide mit ihren physikalischen und chemischen Eigenschaften und den Herstellungsbedingungen wiedergegeben, die in folgendem Drehrohrofen hergestellt wurden.

| | |
|---|---|
| Länge der Heizzone: | 1600 mm |
| Kühlzone (Kühlwasser): | 1000 mm |
| elektrische Heizleistung: | 36 kW |
| Drehgeschwindigkeit: | 1,5-7,5 Upm, stufenlos |
| Neigung des Drehrohrs: | bis 8° |
| Rohrdurchmesser: | 154 mm |
| Werkstoff des Drehrohrs: | Chrom-Molybdän-Stahl |

Als Ausgangsstoff diente in den nachfolgenden Beispielen ein basisches Cobaltcarbonat der folgenden Zusammensetzung:

| CoCO₃/Co(OH)Co₃ im Verhältnis 68/32 | |
|---|---|
| D₅₀: | 4 µm |
| Schüttdichte: | 0,5 g/cm³ |

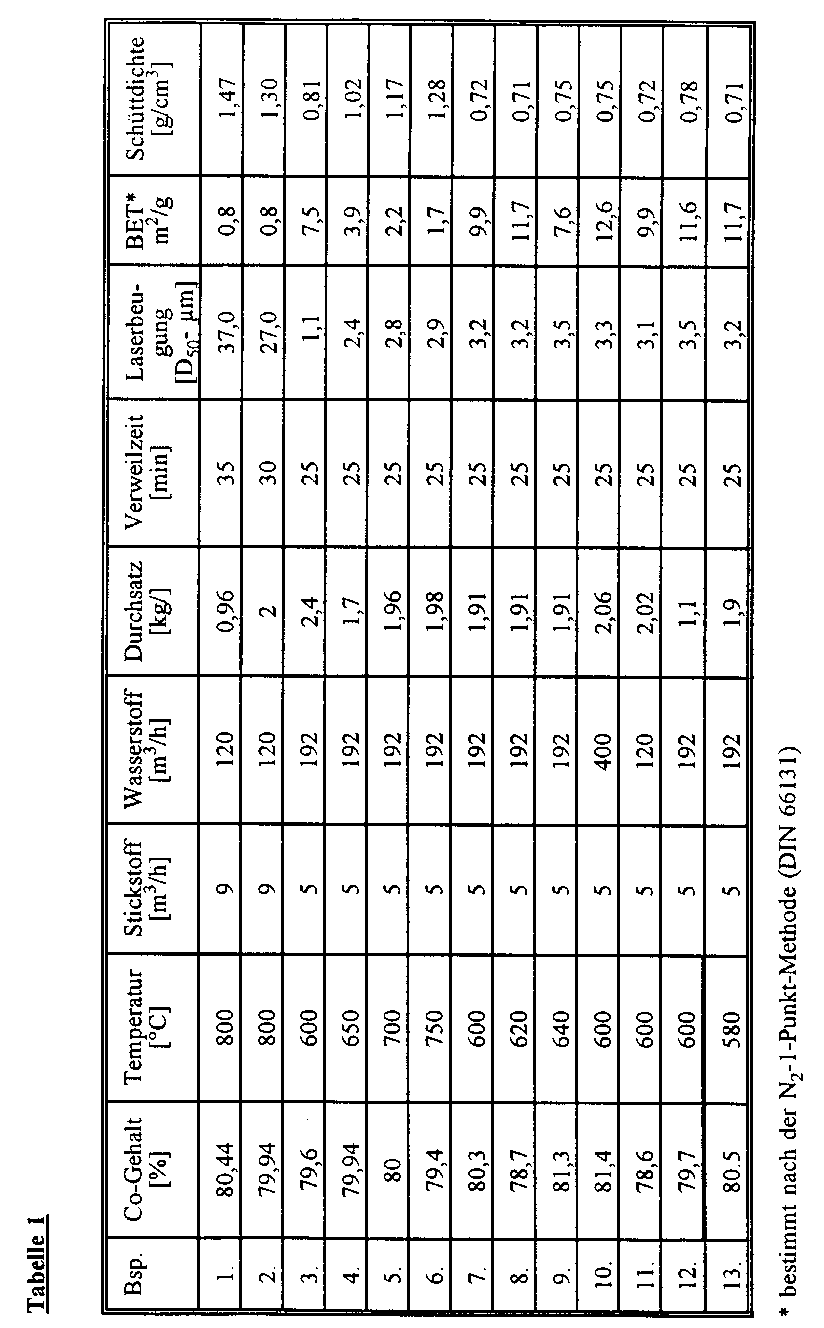

### Beispiel 14

### Vergleich eines Cobaltmonoxids (Vergleich) und einer Cobalt-Cobaltoxid (erfindungsgemäß) enthaltender Elektrode

Eine Nickelhydroxidelektrode in Tablettenform wurde auf folgende Weise hergestellt:

**Tabelle 2**

| | Elektrodenmasse | |
|---|---|---|
| | Vergleich | erfindungsgemäß |
| | Co/CoO | Co/Co_{0.05} (CoO)_{0.95} |
| Nickelhydroxid, regulär, BET 61 m²/g, 1 % Co(OH)₂ dotiert | 100 g | 100 g |
| Cobaltmetallpulver, FSSS 1,5 µm | 2 g | 2 g |
| Cobaltmonoxid, FSSS 1,5 µm | 4 g | |
| Co/Co_{0.05} (CoO)_{0.95} FSSS 1,5 µm aus Beispiel 12 | | 3,9 g |
| Graphit | 40 g | 40 g |

Der Anteil des Cobaltmonoxid bzw. des Cobalt-Cobaltoxids ist so bemessen, daß die gleiche Menge Cobalt in der Elektrode vorliegt.

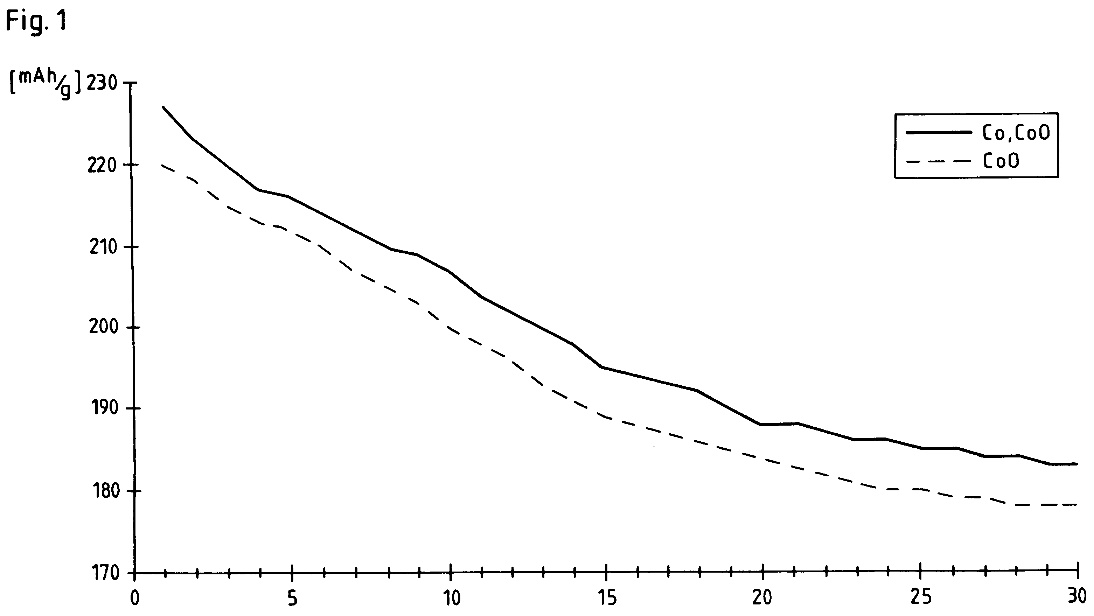

Es wurden 30 Lade- und Entladezyklen mit 1/5 C mit diesen Elektroden gemessen. In Fig. 1 ist die Kapazität der Nickelhydroxidelektrode aus Beispiel 14 in Abhängigkeit von der Zyklenzahl aufgetragen.

Bei gleicher Menge an Cobalt in Form von Cobaltmetallpulver und Cobaltmonoxid bzw. Cobalt-Cobaltoxid ergeben sich beim Cobalt-Cobaltoxid eine höhere Kapazitäüt und damit eine höhrere Ausnutzung der Batterieelektrode.

## Patentansprüche

1. Cobalt-Cobaltoxidpulver der Zusammensetzung Coₓ(CoO)₁₋ₓ, dadurch gekennzeichnet, daß x = 0,02 bis 0,3 beträgt und die mittlere Partikelgröße der Primärteilchen Kleiner als 20 µm beträgt.

2. Cobalt-Cobaltoxidpulver gemäß Anspruch 1, dadurch gekennzeichnet, daß die mittlere Partikelgröße der Primärteilchen 0,5 bis 10 µm beträgt.

3. Cobalt-Cobaltoxidpulver gemäß einem der Ansprüche 1 oder 2, dadurch gekennzeichnet, daß x = 0,02 bis 0,2 beträgt.

4. Verfahren zur Herstellung von Cobalt-Cobaltoxidpulver gemäß einem oder mehreren der Ansprüche 1 bis 3, dadurch gekennzeichnet, daß Cobaltoxid und/oder bei thermischer Zersetzung Cobaltoxide bildende Cobaltverbindungen bei Temperaturen von 500 bis 850°C unter zur Bildung der Cobalt-Cobaltoxidpulver führenden Bedingungen reduziert werden.

5. Verfahren gemäß Anspruch 4, dadurch gekennzeichnet, daß als Cobaltoxide CoO, Co₂O₃ und/oder Co₃O₄ eingesetzt werden.

6. Verfahren gemäß Anspruch 4, dadurch gekennzeichnet, daß als Cobaltoxide bildende Cobaltverbindungen Hydroxide, Oxalate und/oder Carbonate eingesetzt werden.

7. Verfahren gemäß einem oder mehreren der Ansprüche 4 bis 6, dadurch gekennzeichnet, daß als Reduktionsmittel CO, H₂, Kohlenstoff, Erdgas, Kohlenwasserstoffe und/oder Ammoniumformiat eingesetzt werden.

8. Verfahren gemäß einem oder mehreren der Ansprüche 4 bis 7, dadurch gekennzeichnet, daß die Reduktionsmittel mit Inertgasen verdünnt sind.

9. Verfahren gemäß einem oder mehreren der Ansprüche 4 bis 8, dadurch gekennzeichnet, daß die Umsetzung kontinuierlich in Drehrohröfen oder Wirbelbetten durchgeführt wird.

10. Verfahren gemäß einem oder mehreren der Ansprüche 1 bis 9, dadurch gekennzeichnet, daß die Umsetzung bei Temperaturen zwischen 580 und 650°C durchgeführt wird.

11. Verwendung von Cobalt-Cobaltoxidpulvern gemäß einen Ansprüche 1-3 und hergestellt gemäß einem oder mehreren der Ansprüche 4 bis 10 als Bestandteil von Elektrodenmassen von sekundären Batterien.

## Claims

1. Cobalt-cobalt oxide powder having the composition COₓ(COO)₁₋ₓ, characterised in that x = 0.02 to 0.3 and the average particle size of the primary particles is less than 20 µm.

2. Cobalt-cobalt oxide powder according to claim 1, characterised in that the average particle size of the primary particles is from 0.5 to 10 µm.

3. Cobalt-cobalt oxide powder according to one of claims 1 or 2, characterised in that x = 0.02 to 0.2.

4. Process for the production of cobalt-cobalt oxide powder according to one or more of claims 1 to 3, characterised in that cobalt oxide and/or cobalt compounds which form cobalt oxides on thermal decomposition are reduced at temperatures of from 500 to 850°C under conditions leading to the formation of cobalt-cobalt oxide powders.

5. Process according to claim 4, characterised in that CoO, Co₂O₃ and/or Co₃O₄ are used as cobalt oxides.

6. Process according to claim 4, characterised in that hydroxides, oxalates and/or carbonates are used as cobalt compounds which form cobalt oxides.

7. Process according to one or more of claims 4 to 6, characterised in that CO, H₂, carbon, natural gas, hydrocarbons and/or ammonium formate are used as reducing agents.

8. Process according to one or more of claims 4 to 7, characterised in that the reducing agents are diluted with inert gases.

9. Process according to one or more of claims 4 to 8, characterised in that the reaction is carried out continuously in rotating tube furnaces or fluidised beds.

10. Process according to one or more of claims 1 to 9, characterised in that the reaction is carried out at temperatures of from 580 to 650°C.

11. Use of cobalt-cobalt oxide powders according to one of claims 1 to 3 and produced according to one or more of claims 4 to 10 as a constituent of electrode materials of secondary batteries.

## Revendications

1. Poudre de cobalt-oxyde de cobalt de composition Co_{X}(CoO)_{1-X}, caractérisée en ce que x = 0,02 à 0,3 et que la granulométrie moyenne des particules primaires est inférieure à 20 µm.

2. Poudre de cobalt-oxyde de cobalt selon la revendication 1, caractérisée en ce que la granulométrie moyenne des particules primaires est comprise entre 0,5 et 10 µm.

3. Poudre de cobalt-oxyde de cobalt selon une des revendications 1 et 2, caractérisée en ce que x = 0,02 à 0,2.

4. Procédé de production de poudre de cobalt-oxyde de cobalt selon une ou plusieurs des revendications 1 à 3, caractérisé en ce que de l'oxyde de cobalt et/ou des composés cobalt formant des oxydes de cobalt par décomposition thermique sont réduits à des températures de 500 à 850°C dans des conditions aboutissant à la formation de la poudre de cobalt-oxyde de cobalt.

5. Procédé selon la revendication 4, caractérisé en ce qu'on utilise CoO, Co₂O₃ et/ou Co₃O₄ comme oxydes de cobalt.

6. Procédé selon la revendication 4, caractérisé en ce qu'on utilise des hydroxydes, des oxalates et/ou des carbonates comme composés cobalt formant des oxydes de cobalt.

7. Procédé selon une ou plusieurs des revendications 4 à 6, caractérisé en ce qu'on utilise comme réducteurs CO, H₂, du carbone, du gaz naturel, des hydrocarbures et/ou du formiate d'ammonium.

8. Procédé selon une ou plusieurs des revendications 4 à 7, caractérisé en ce que les réducteurs sont dilués avec des gaz inertes.

9. Procédé selon une ou plusieurs des revendications 4 à 8, caractérisé en ce que la réaction est mise en oeuvre en continu dans des fours tubulaires rotatifs ou dans des lits fluidisés.

10. Procédé selon une ou plusieurs des revendications 1 à 9, caractérisé en ce que la réaction est mise en oeuvre à des températures comprises entre 580 et 650°C.

11. Utilisation de poudres de cobalt-oxyde de cobalt selon une des revendications 1 à 3, préparées selon une ou plusieurs des revendications 4 à 10, comme composant de masses d'électrodes d'accumulateurs secondaires.
